# EUROPÄISCHE PATENTSCHRIFT

(11) **EP 0 414 941 B1**
(45) Veröffentlichungstag und Bekanntmachung des Hinweises auf die Patenterteilung: **28.07.1993**
(21) Anmeldenummer: 89116027.7
(22) Anmeldetag: 30.08.1989
(51) Int. Cl.: B60H 1/00, G05D 3/12, F24F 11/02

(54) **Stellantrieb**
Drive for positioning equipment
Dispositif de commande de la position d'un équipement

(43) Veröffentlichungstag der Anmeldung: 06.03.1991
(73) Patentinhaber: SIEMENS AKTIENGESELLSCHAFT, 80333 München (DE)
(72) Erfinder: Schramm, Michael, Dipl.-Ing. (FH), D-8632 Neustadt (DE)

(56) Entgegenhaltungen:
- GB-A- 768 353
- US-A- 2 384 622
- US-A- 2 853 664
- US-A- 2 989 680
- PATENT ABSTRACTS OF JAPAN, Band 10, Nr. 331 (M-533)[2387], 11. November 1986; & JP-A-61 135 816 (NIPPON DENSO CO., LTD) 23-06-1986

## Beschreibung

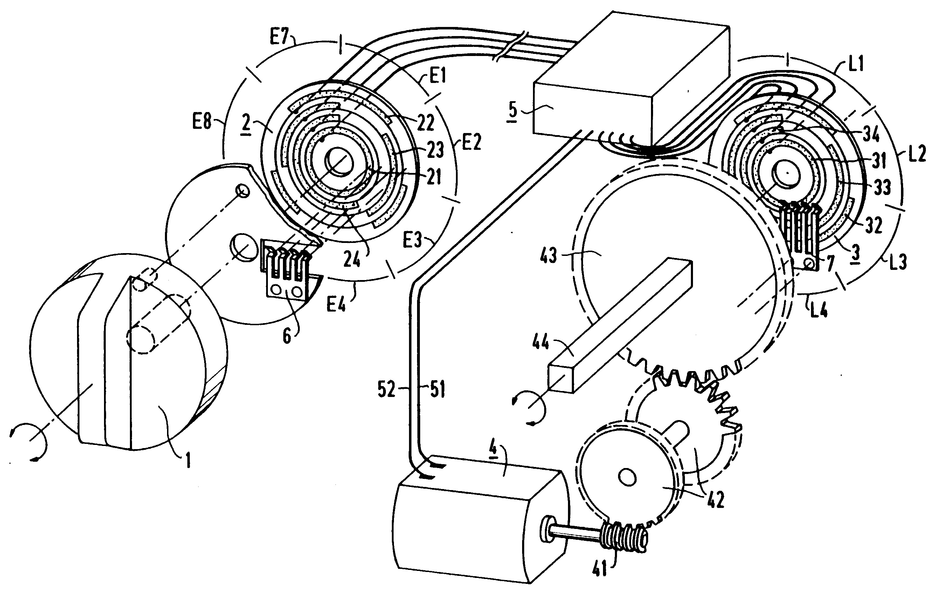

Die Erfindung bezieht sich auf einen Stellantrieb gemäß Oberbegriff des Anspruchs 1; ein derartiger Stellantrieb ist durch die DE-Al-36 33 794, FIG 6 bekannt.

Bei der durch die DE-Al-36 33 794 bekannten Vorrichtung zum Bewegen einer Klappe in einer Klimaanlage werden von einem linear bewegbaren Bedienknopf zur Einstellung einer Temperatur ein Schiebepotentiometer bewegt und ein entsprechender Widerstandswert an eine u.a. einen Komparator enthaltende elektronische Steuerschaltung weitergegeben, von der solange ein Speisestrom für einen die Luftverteilungsklappe betätigenden Elektromotor durchgesteuert wird, bis ein mit dessen Rotorwelle in Drehverbindung stehendes Potentiometer einen dem des Schiebepotentiometers gleichen Widerstandswert an den Komparator der elektronischen Steuerschaltung abgibt; der dadurch zum Stillstand kommende Elektromotor hat dann die Klappe in einer der eingestellten Temperatur entsprechende Stellung gebracht.

Ein demgegenüber bedienungsfreundlicherer, störsicherer und kleinbauenderer Stellantrieb für eine Luftverteilungsklappe in einem Kraftfahrzeug-Heiz- und/oder Klimagerät der eingangs genannten Art kann gemäß vorliegender Erfindung durch die Lehre des Patentanspruchs 1 erreicht werden; vorteilhafte Ausgestaltungen der Erfindung sind jeweils Gegenstand der Unteransprüche.

Der erfindungsgemäße Stellantrieb erlaubt ohne sperrige mechanische Übertragungsglieder die Weitergabe einer Vielzahl von durch den in vorteilhafter Weise voll umlauffähigen Bedienknopf vorgebbaren Winkeleinstellungen in störsicherer digitaler Form an die zweite, mit dem Antrieb der Luftverteilungsklappe verbundene Code-Scheibe, wodurch trotz Verwendung eines nur üblichen Gleichstrommotors eine echte Regelung bzw. eine mit einem Schrittmotorantrieb vergleichbare Steuerung möglich ist.

Zweckmäßigerweise sind die beiden Code-Scheiben jeweils mit einer über den gesamten Umfang kontaktgebenden Schleifbahn und mit dazu konzentrischen nach dem an sich bekannten (z.B. Buch von Tietze und Schenk: "Halbleiter Schaltungstechnik", Springer-Verlag, 9. Auflage, S.249-251) BCD-codierten kontaktgebenden Schleifbahnen der unterschiedlichen Wertigkeit 2⁰,2¹,2² und einem je Code-Scheibe jeweils sämtlichen Schleifbahnen zugeordneten Schleifer ausgeführt, wodurch z.B. in kompakter Konstruktion mit lediglich drei konzentrischen codierten Schleifbahnen und einem bedienungsfreundlich voll umlauffähigen einzigen Bediendrehknopf insgesamt sieben individuelle Stellungen der Luftverteilungsklappe einregelbar sind.

Die Erfindung sowie weitere vorteilhafte Ausgestaltungen der Erfindung werden im folgenden anhand eines schematisch dargestellten Ausführungsbeispiels in der Zeichnung näher erläutert.

An einem hier nicht näher dargestellten Bediengerät am Armaturenbrett eines Kraftfahrzeuges ist zur Einstellung z. B. der Temperatur eines Klimagerätes ein von Hand betätigbarer Dreh-Bedienknopf 1 vorgesehen, dessen Sollwert als Drehwinkelstellung auf eine Code-Scheibe 2 übertragen wird. Die Code-Scheibe 2 enthält u.a. eine innere, über den gesamten Umfang kontaktgebende Schleifbahn 21 und drei dazu konzentrische, im BCD-Code codiert kontaktgebende Schleifbahnen 21,22,23. Die Schleifbahn 21 weist die Wertigkeit 2⁰, die Schleifbahn 22 die Wertigkeit 2¹ und die Schleifbahn 23 die Wertigkeit 2² auf, derart daß über den gesamten Umfang der Code-Scheibe 2 insgesamt sieben Teilschritte und somit insgesamt sieben verschiedene Stellungen E1-E7 als Sollwertvorgabe durch den Dreh-Bedienknopf 1 möglich sind. Der Dreh-Bedienknopf 1 ist dabei in vorteilhafter Weise voll umlauffähig, d.h. es kann in jeder Drehrichtung von einer Stellung in die andere, gegebenenfalls unter Überfahrung beliebiger Zwischenstellungen, die Sollwertvorgabe geändert und störsicher auf die Codier-Scheibe 2 übertragen werden.

Der Codier-Scheibe 2 entspricht eine weitere Codier-Scheibe 3 mit einer durchgehend kontaktgebenden Schleifbahn 31 und dazu konzentrischen, in gleicher Weise wie die der Code-Scheibe 2 codiert kontaktgebenden Schleifbahnen 32,33,34 mit entsprechend sieben verschiedenen Einstellungen L1-L7 für eine Luftverteilungsklappe die mit der weiteren Code-Scheibe 3 über die Abtriebswelle 44 in hier nicht näher dargestellter Weise in Drehabhängigkeit steht.

Sämtliche Schleifbahnen jeder Code-Scheibe 2 bzw.3 werden durch einen gemeinsamen Schleifer 6 bzw.7 kontaktiert, durch den jeweils der gemeinsame Anschluß der über ihren gesamten Umfang kontaktgebenden Schleifbahn 21 bzw.31 mit den jeweils gleichzeitig vom Schleifer 6 bzw.7 vorhandenen Kontaktbereiche der übrigen Schleifbahnen 24-27 verbunden ist.

Sämtliche Schleifbahnen 21-24 bzw.31-34 sind an einen Komparator 5 angeschlossen. Von diesem Komparator 5 wird über Speiseleitungen 51,52 der über eine Schneckenwelle 41 und ein Untersetzungsgetriebe mit den Getrieberädern 42,43 die Abtriebswelle 44 antreibende Elektromotor 4 solange bestromt und damit in der einen oder anderen Drehrichtung angetrieben, bis die Code-Scheibe 3 und damit die Luftverteilungsklappe auf schnellstem Wege die zum Dreh-Bedienknopf 1 und damit der Code-Scheibe 2 vorgegebene Winkelposition erreicht hat. Bei Abgleich der beiden Winkelpositionen wird die Bestromung des Elektromotors 4 durch Unterbrechung der Motorspeiseleitung 51 bzw.52 in Ruhe gestellt. Der Elektromotor 4 bleibt in Ruhestellung solange beide Code-Scheiben 2 bzw.3 in gleicher Winkelstellung abgetastet und somit die Gleichheit von durch den Dreh-Bedienknopf 1 vorgebbarem Sollwert und von der Abtriebswelle 44 eingenommenem Istwert angezeigt sind.

## Patentansprüche

1. Stellantrieb zur Betätigung einer Luftverteilungsklappe insbesondere in einem Kraftfahrzeug-Klima- und/oder Belüftungsgerät, mit einem Elektromotor (4) zur Verstellung der Luftverteilungsklappe, der über einen Komparator (5) in Nachführeinstellabhängigkeit von einer durch ein Stellglied vorgebbaren Stellgröße steht, **gekennzeichnet** durch jeweils in Drehverbindung mit dem Dreh-Bedienknopf (1) bzw. mit dem Antrieb (Abtriebswelle 44) der Luftverteilungsklappe stehenden, einander korrespondierenden Code-Scheiben (2 bzw.3) mit elektrischen Schleifbahn-Anschlußverbindungen zu einem Komparator (5) mit bei Nichtabgleich der beiden Code-Scheiben (2;3) bestromtem Elektromotor (4).

2. Stellantrieb nach Anspruch 1, **gekennzeichnet** durch einen vollumlauffähigen Dreh-Bedienknopf (1).

3. Stellantrieb nach Anspruch 1 und/oder 2, **gekennzeichnet** durch Code-Scheiben (2 bzw.3) mit binär, insbesondere im BCD-Code, codierten Schleifbahnen (22,23,24 bzw.32,33,34).

4. Stellantrieb nach Anspruch 2 und/oder 3, **gekennzeichnet** durch Code-Scheiben (2 bzw.3) mit je einer über den vollen Umfang kontaktgebenden Schleifbahn (21 bzw.31), dazu konzentrischen, binär codierten, kontaktgebenden Schleifbahnen (22,23,24 bzw.32,33,34) und einem jeweils sämtlichen Schleifbahnen (22,23,24 bzw.32,33,34) zugeordnetem Schleifer (6 bzw.7).

5. Stellantrieb nach Anspruch 4, **gekennzeichnet** durch drei mit der unterschiedlichen Wertigkeit 2⁰,2¹,2² im Sinne von insgesamt sieben, vom Dreh-Bedienknopf (1) über seinen Umfang einstellbaren Stellungen (E1-E7) codierten konzentrischen Schleifbahnen (22,23,24) für die mit dem Dreh-Bedienknopf (1) in Drehverbindung stehende Code-Scheibe (2) und durch drei mit der unterschiedlichen Wertigkeit 2⁰,2¹,2² im Sinne von insgesamt sieben entsprechend durch den nachgeführten Elektromotor (4) einstellbaren Luftverteilungsklappen-Stellungen (L1-L7) codierten konzentrischen Schleifbahnen (32,33,34) für die mit der Abtriebswelle (44) für die mit der Luftverteilungsklappe in Drehverbindung stehende Code-Scheibe (3).

## Claims

1. Actuating drive for operating an air-distributing flap, in particular in a motor vehicle air-conditioning and/or ventilating apparatus, having an electric motor (4) for the adjustment of the air-distributing flap, which motor, by way of a comparator (5), is dependent upon an actuating variable which can be preset by means of an actuator so that the motor is set in a tracking operation, characterised by code disks (2 and 3) which respectively communicate rotationally with the rotary operating knob (1) and with the drive (driven shaft 44) of the air-distributing flap and correspond to each other, the disks having electrical slideway terminal connections to a comparator (5), with current flowing through the electric motor (4) when the two code disks (2; 3) do not match.

2. Actuating drive according to claim 1, characterised by a fully rotatable rotary operating knob (1).

3. Actuating drive according to claim 1 and/or 2, characterised by code disks (2 and 3) with slideways (22, 23, 24, and 32, 33, 34 respectively) which are binary coded, in particular are coded in BCD-code.

4. Actuating drive according to claim 2 and/or 3, characterised by code disks (2 and 3) with respectively one slideway (21 and 31) contacting over the entire periphery, contacting slideways (22, 23, 24 and 32, 33, 34) which are concentric thereto and are binary coded, and a slider (6 and 7) associated with each of the slideways (22, 23, 24 and 32, 33, 34).

5. Actuating drive according to claim 4, characterised by three concentric slideways (22, 23, 24) for the code disk (2) rotationally communicating with the rotary operating knob (1), which slideways (22, 23, 24) are coded with differing significance 2⁰, 2¹, 2² for the purposes of, in total, seven positions (E1-E7) which can be set by the rotary operating knob (1) over its periphery, and by three concentric slideways (32, 33, 34) for the code disk (3) rotationally communicating with the driven shaft (44) for the air-distributing flap, which slideways (32, 33, 34) are coded with differing significance 2⁰, 2¹, 2² for the purposes of, in total, seven air-distributing flap positions (L1-L7) which can be set accordingly by the electric motor (4) set in the tracking operation.

## Revendications

1. Servomoteur destiné à actionner un volet de répartition d'air, notamment dans une installation de climatisation et/ou d'aération d'un véhicule automobile, comportant un moteur électrique (4) pour régler le volet de répartition d'air et qui, par l'intermédiaire d'un comparateur (5), est placé dans une relation de dépendance d'asservissement vis-à-vis d'une grandeur de réglage pouvant être prédéterminée par un organe de réglage, caractérisé par des disques à codes (2 ou 3), qui se correspondent entre eux et sont raccordés respectivement, selon une liaison d'entraînement en rotation, au bouton rotatif de commande (1) ou au dispositif d'entraînement (arbre mené 44) du volet de répartition d'air, et comportant des liaisons électriques, en forme de pistes de glissement, pour le raccordement, par l'intermédiaire d'un comparateur (5), à un moteur électrique (4) alimenté en courant dans le cas d'un non-alignement des deux disques à codes (2;3).

2. Servomoteur suivant la revendication 1, caractérisé par un bouton de commande rotatif (1) pouvant tourner sur un tour complet.

3. Servomoteur suivant la revendication 1-et/ou 2, caractérisé par des disques à codes (2 ou 3) comportant des pistes de glissement (22,23,24 ou 32,33,34) codées en binaire, notamment selon le code DCB.

4. Servomoteur suivant la revendication 2 et/ou 3, caractérisé par des disques à codes (2 ou 3) comportant chacun une piste de glissement (21 ou 31), qui établit un contact sur toute la périphérie, des pistes de glissement (22,23,24 ou 32,33,34), qui sont concentriques à la piste précédente, sont codées en binaire et établissent un contact, et un curseur (6 ou 7) associé respectivement à toutes les pistes de glissement (22,23,24 ou 32,33,34).

5. Servomoteur suivant la revendication 4, caractérisé par trois pistes de glissement concentriques (22,23,24), codées avec les différentes valeurs (2⁰,2¹,2²) conformément à un ensemble de sept positions (E1-E7) pouvant être réglées au moyen du bouton de commande rotatif (1) sur sa périphérie, pour le disque à codes (2) qui est raccordé selon une liaison d'entraînement en rotation au bouton de commande rotatif (1), et par trois pistes concentriques de glissement (32,33,34), codées avec les valeurs différentes (2⁰,2¹,2²) conformément à un ensemble de sept positions (L1-L7) du volet de répartition d'air, réglables de façon correspondante à l'aide du moteur électrique asservi (4), pour le disque à codes (3) raccordé selon une liaison d'entraînement à l'arbre mené (44) pour le volet de répartition d'air.
